# EUROPÄISCHE PATENTSCHRIFT

(11) **EP 2 944 588 B1**
(45) Veröffentlichungstag und Bekanntmachung des Hinweises auf die Patenterteilung: **28.12.2016**
(21) Anmeldenummer: 14168603.0
(22) Anmeldetag: 16.05.2014
(51) Int. Cl.: B65G 29/00, B65G 47/84

(54) **Transportstern mit einer Magnethalterung zur lösbaren Kopplung des Transportsternes mit einer Drehachse**
Transport star wheel with magnets for releasable coupling of the star wheel to a rotating shaft
Roue de transport en étoile comprenant des aimants pour le couplage amovible de la roue en étoile avec un arbre tournant

(43) Veröffentlichungstag der Anmeldung: 18.11.2015
(73) Patentinhaber: KHS GmbH, 44143 Dortmund (DE)
(72) Erfinder: Garcia, Alberto, Toluca Estado de México 50245 (MX); Zamora, Rosendo, Toluca Estado de México 50210 (MX)
(74) Vertreter: Ehmer, Wilfried

(56) Entgegenhaltungen:
- WO-A1-2007/125553
- DE-A1- 3 432 590

## Beschreibung

Die Erfindung betrifft ein Behältertransportelement und eine hiermit ausgerüstete Behältertransportvorrichtung.

Behälter, bspw. Getränkebehälter, insbesondere Flaschen, werden in verschiedenen Behälterbehandlungsanlagen transportiert, bspw. in Befüllanlagen, Etikettieranlagen, Reinigungsanlagen, etc. Zum Transport der Behälter, insbesondere in aufrechter Stellung, sind einerseits Förderbänder bekannt, auf denen eine im Wesentlichen lineare Beförderung erfolgt. Andererseits sind rotierende Behältertransportelemente bekannt, bei denen ein Ringelement eine am Umfang ausgebildete Behältertransportstruktur mit einer Mehrzahl von Behälteraufnahmen aufweist, die bei einer Drehung des Ringelements transportiert werden. Ein solches Behältertransportelement wird auch als Transportstern bezeichnet.

Die WO 2007/125553 A1 offenbart einen Sternradförderer gemäß dem Oberbegriff des Anspruchs 1.

Die WO 2006/077051 A1 beschreibt einen Transportstern, bei dem ein Garniturteil mit Verriegelungselementen an einem Ring befestigt ist, der durch Speichen mit einer rotierenden Nabe verbunden ist.

Zur Verwendung mit Behältern verschiedener Größe ist es vorteilhaft, wenn die Behältertransportstruktur einer Behältertransportvorrichtung leicht wechselbar ist.

Es ist Aufgabe der Erfindung, ein Behältertransportelement und eine Behältertransportvorrichtung hiermit vorzuschlagen, bei denen insbesondere bei einem solchen Wechsel die Handhabung erleichtert ist.

Die Aufgabe wird gelöst durch ein Behältertransportelement gemäß Anspruch 1 und eine Behältertransportvorrichtung gemäß Anspruch 12. Abhängige Ansprüche beziehen sich auf vorteilhafte Ausführungsformen der Erfindung.

Das erfindungsgemäße Behältertransportelement weist ein Ringelement auf mit einer am Umfang angeordneten Behältertransportstruktur. Diese weist eine Mehrzahl von Behälteraufnahmen auf. Dies können im einfachsten Fall Ausnehmungen zur Aufnahme von Behältern sein, ebenso können aber an jeder Behälteraufnahme auch zusätzliche Aufnahmeelemente, bspw. Greifelemente, Klemmelemente, etc. vorgesehen sein. Das Ringelement ist dazu vorgesehen, bei einer Drehung die in den Behälteraufnahmen angeordneten Behälter auf einer Kreisbahn zu befördern.

Dabei ist erfindungsgemäß eine Magnethalterung am Ringelement vorgesehen. Die Magnethalterung ermöglicht ein einfaches Anbringen des Ringelements an einem entsprechenden Gegenstück mit einer ferromagnetischen Haltefläche. Dabei weist die Magnethalterung mindestens ein Magnetelement auf, das am Ringelement verstellbar ist, nämlich mindestens zwischen einer Festlegungsstellung, in der es an einem entsprechenden Gegenstück festgelegt ist, und einer Lösungsstellung, in der es von dem Gegenstück gelöst ist.

Die erfindungsgemäße Behältertransportvorrichtung sieht ein drehbar angeordnetes Zentralelement vor, mit dem das Ringelement durch die Magnethalterung gekoppelt ist. Bevorzugt liegt das Magnetelement in der Festlegungsstellung am Zentralelement an, so dass das Ringelement am Zentralelement lösbar befestigt ist. In der Lösungsstellung ist das Magnetelement bevorzugt im Abstand von dem Zentralelement angeordnet, so dass die Kopplung gelöst ist.

Die Verwendung einer Magnethalterung erweist sich in der Handhabung als besonders einfach. Bei einer Magnethalterung ist im Gegensatz zu herkömmlichen mechanischen Verriegelungen die Verwendung von größeren, glatten und geschlossenen Flächen ermöglicht, was große Vorteile bei der Reinigung bietet. Dabei erlaubt eine Magnethalterung eine ausreichend haltbare Verbindung, durch die bevorzugt die Lage des Behältertransportelements bspw. an einem Zentralelement vollständig fixiert werden kann. Insbesondere kann bspw. die Höhe des Behältertransportelements mit zum anschließenden Betrieb ausreichender Kraft festgelegt sein. Die Haltekraft kann auch ausreichend sein, um eine bei den im Betrieb auftretenden Drehmomenten drehfeste Verbindung zu ermöglichen.

Bevorzugt ist die Magnethalterung innen am Ringelement angeordnet. Dabei ist weiter bevorzugt, dass das Magnetelement in der Festlegungsstellung radial weiter innen angeordnet ist als in der Lösungsstellung, d. h. sich bei der Verstellung mindestens teilweise radial bewegt. Dies ermöglicht es, das Magnetelement in die Lösungsstellung zu bringen und das Ringelement auf ein Zentralelement aufzusetzen, so dass es dieses umgibt. Anschließend kann durch Verstellung des Magnetelements in die Festlegungsstellung die Kopplung hergestellt werden.

Die Verstellung des Magnetelements erfolgt gemäß einer Weiterbildung der Erfindung durch ein verstellbares Betätigungselement, bspw. einen Schwenkhebel. Das Magnetelement ist dann bevorzugt so mit dem Betätigungselement gekoppelt, dass es bei einer Verstellung des Betätigungselements zwischen der Festlegungsstellung und Lösungsstellung verstellt wird.

Für die Verstellung des Magnetelements kann bevorzugt eine Führung vorgesehen sein. Insbesondere ist bevorzugt, dass das Magnetelement in der Führung verschiebbar gelagert ist und bei der Bewegung zwischen der Festlegungsstellung und der Lösungsstellung in der Führung geführt ist. Insbesondere kann die Führung als Gleitführung gebildet sein, bspw. mit beidseitiger Anlage des Magnetelements. Alternativ oder zusätzlich ist auch eine Kulissenführung möglich.

Bevorzugt sind mehrere Magnethalterungen am Ringelement angeordnet. Diese sind bevorzugt gleichmäßig über den Umfang verteilt.

Gemäß einer Weiterbildung der Erfindung ist bevorzugt, dass das Ringelement mehrteilig ausgebildet ist. Dabei kann die Teilung bevorzugt radial verlaufen, so dass bspw. halbe, Drittel- oder Viertelringe zu einem Ringelement zusammengesetzt werden können. Zwischen den Teilen des Ringelements sind bevorzugt Eingriffsstrukturen vorgesehen, die ineinander eingreifen und so die Teile des Ringelements miteinander koppeln. Bevorzugt ist dabei eine formschlüssige Aufnahme eines vorstehenden Eingriffselements an einem Teil in einer passenden Aufnahmeöffnung eines zweiten Teils des Ringelements. Bei einer Unterteilung des Ringelements in mehrere Teile ist bevorzugt, dass an jedem der Teile mindestens eine Magnethalterung vorgesehen ist.

Gemäß einer Weiterbildung der Erfindung ist im Inneren des Ringelements mindestens ein Eingriffselement vorgesehen. Bei der Behältertransportvorrichtung ist hierfür bevorzugt am Zentralelement eine passende Eingriffsstruktur vorgesehen, so dass das Eingriffselement in die Eingriffsstruktur eingreift. Das Eingriffselement ist bevorzugt ein vorstehendes Element, ebenso kann aber auch eine Aussparung verwendet werden. Durch den Eingriff kann einerseits eine Festlegung der Drehposition erfolgen, wenn die Eingriffsstruktur und das Eingriffselement so ausgebildet sind, dass sie nur in einer Drehlage in Eingriff kommen können. Weiter kann durch die Kopplung eines Eingriffselements mit der Eingriffsstruktur eine Verbindung geschaffen werden, die das Ringelement in Umfangsrichtung formschlüssig mit dem Zentralelement koppelt und so eine drehfeste Verbindung erzielt.

Bevorzugt weist das Magnetelement eine gekrümmte Fläche auf. Diese ist weiter bevorzugt in der Festlegungsstellung radial nach innen ausgerichtet. Eine solche gekrümmte Fläche ist bevorzugt geeignet zur Anlage an ein Zentralelement mit einer mindestens im Wesentlichen zylinderförmigen Außenfläche.

Gemäß einer Weiterbildung der Erfindung kann das Ringelement mindestens einen ersten und einen zweiten Ring aufweisen, die axial voneinander beabstandet sind. Die Ringe können dabei jeweils rautenförmig ausgebildet sein. Bevorzugt ist das Magnetelement in dem Raum zwischen den Ringen angeordnet. So kann auf einfache Weise eine Führung an den Ringen gebildet sein.

Nachfolgend wird eine Ausführungsform der Erfindung anhand von Zeichnungen näher beschrieben. Dabei zeigen:
- Fig. 1: eine perspektivische Darstellung einer Ausführungsform eines Behältertransportelements;
- Fig. 2: eine Draufsicht auf das Behältertransportelement aus Fig. 1;
- Fig. 3: eine Ansicht eines Schnitts durch das Behältertransportelement aus Fig. 1, Fig. 2 entlang der Linie A..A;
- Fig. 4: eine perspektivische Darstellung eines Teils einer Behältertransportvorrichtung mit dem Behältertransportelement aus Fig. 1 - 3;
- Fig. 5, Fig. 6: perspektivische Darstellungen von Teilen der Behältertransportvorrichtung aus Fig. 4.

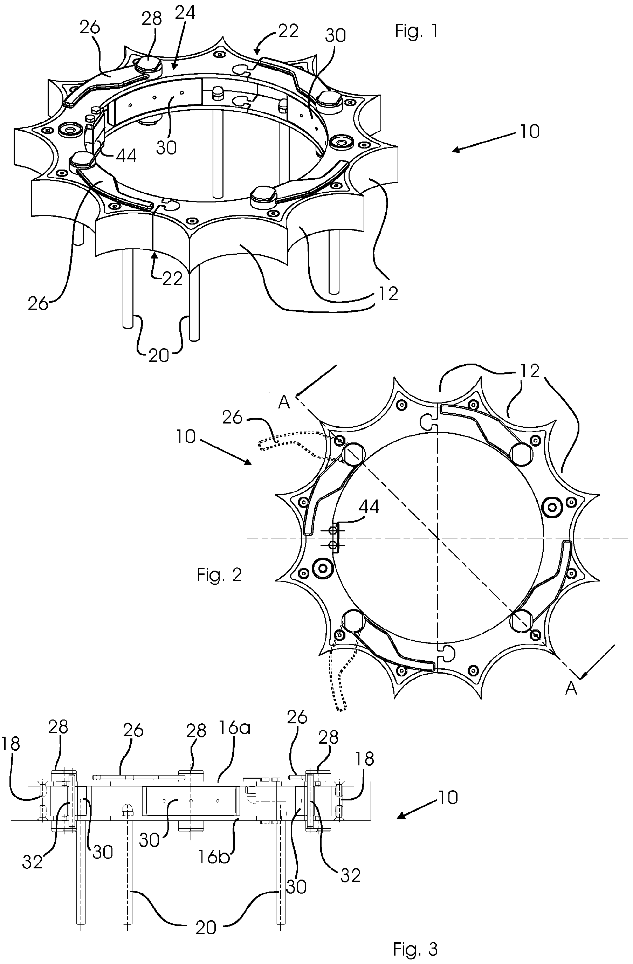

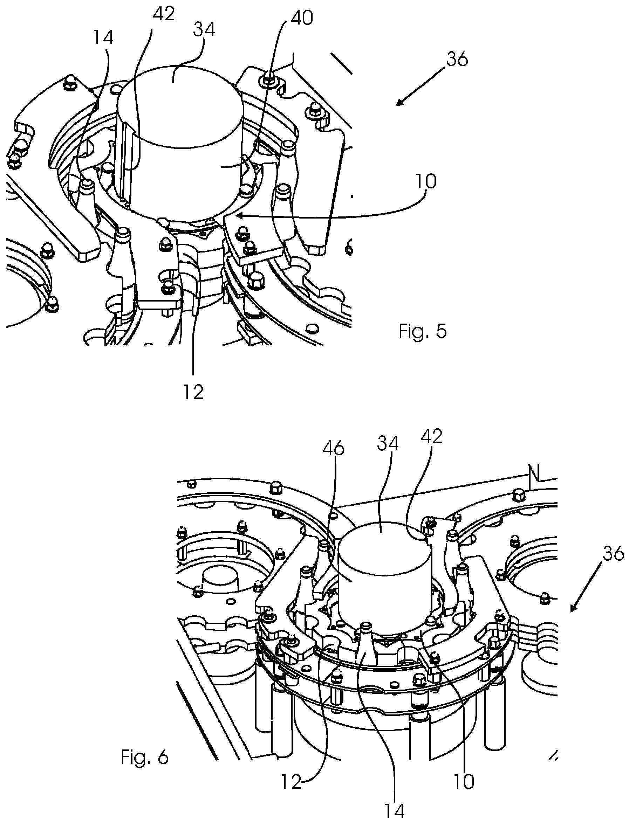

In Fig. 1 ist ein Behältertransportelement (Transportstern) 10 dargestellt mit mehreren am äußeren Umfang gebildeten Aufnahmen 12 in denen, wie bspw. aus Fig. 6 ersichtlich ist, zu transportierende Behälter, nämlich bspw. Flaschen 14 aufgenommen werden können.

Der Transportstern 10 weist, wie insbesondere aus der Schnittdarstellung in Fig. 3 ersichtlich ist, einen Ring auf, der aus einem oberen und unteren plattenförmigen Ringelement 16a, 16b gebildet ist, die über am Umfang verteilte Distanzstücke parallel zueinander im axialen Abstand gehalten sind. Vom unteren Ringelement 16b erstrecken sich in axialer Richtung Stützen 20.

Wie insbesondere aus Fig. 1, Fig. 2 ersichtlich ist der Transportstern 10 an zwei gegenüberliegenden Ansatzstellen 22 in radialer Richtung geteilt, so dass er im gezeigten Beispiel aus zwei Halbringen besteht. Diese sind an jeder der Ansatzstellen 22 an beiden Ringelementen 16a, 16b durch formschlüssige Eingriffsstrukturen lösbar miteinander verbunden. Im gezeigten Beispiel sind die Eingriffsstrukturen jeweils gebildet durch ein vorstehendes Eingriffselement und eine passende Aussparung, die nach Art von Puzzleteilen ineinander eingreifen.

Gleichmäßig am Umfang des Transportsterns 10 verteilt sind vier Magnethalterungen 24 vorgesehen. Diese umfassen jeweils einen Betätigungshebel 26, der in einem Drehgelenk 28 schwenkbar gelagert ist. Die Schwenkhebel 26 sind wie in Fig. 2 angedeutet in den Drehgelenken 28 nach Außen verschwenkbar.

Unterhalb der Gelenke 28 ist jeweils im Raum zwischen den Ringelementen 16a, 16b ein Magnetelement 30 angeordnet. Dieses weist eine innere, mit dem Innenradius des Transportsterns 10 gekrümmte Magnetfläche auf. Das Magnetelement kann bspw. einstückig aus einem Permanentmagnetmaterial gebildet sein, oder es umfasst eine Mehrzahl einzelner, gleich ausgerichteter Magnetstücke, bspw. Neodym-Magnete.

Dabei sind die Magnetelemente 30 zwischen den Ringelementen 16a, 16b radial verstellbar. In der in Fig. 1 gezeigten Festlegungsstellung liegen die inneren Magnetflächen der Magnetelemente 30 bündig mit der Innenseite der Ringelemente 16a, 16b. In einer Lösungsstellung (in den Figuren nicht dargestellt) sind die Magnetelemente 30 radial nach außen versetzt und befinden sich in einem Abstand von bspw. ca. 1 - 2 cm entfernt von der Innenseite der Ringelemente 16a, 16b.

Bei der Bewegung der Magnetelemente 30 sind diese zwischen den Ringelementen 16a, 16b durch beidseitige Anlage geführt. Zudem ist wie nachfolgend erläutert eine Kulissenführung vorgesehen.

Die Verstellung der Magnetelemente 30 zwischen der Festlegungsstellung und der Lösungsstellung erfolgt mittels der Schwenkhebel 26. Diese können in den Gelenken 28 um axial ausgerichtete Schwenkachsen verschwenkt werden. Wie aus der Schnittansicht in Fig. 3 ersichtlich, ist an jedem der Gelenke 28 ein exzentrisch gelagerter Bolzen 32 vorgesehen, der jeweils das zwischen den Ringelementen 16a, 16b angeordnete Magnetelement 30 durchdringt. In den Ringelementen 16a, 16b sind zur Bildung einer Kulissenführung teilringförmige Schlitze (zeichnerisch nicht dargestellt) freigelassen, in denen sich die Bolzen 32 beim Verschwenken der Schwenkhebel 26 auf einer Teilkreisbahn verschieben können.

Bei der Bewegung der Bolzen 32 werden die Magnetelemente 30 mitbewegt. So werden die Magnetelemente 30 durch die Hebel 26 zwischen den beiden Stellungen verstellt. Aufgrund der Führung durch die Bolzen 32 handelt es sich nicht um eine gerade, ausschließlich radiale Bewegung, sondern auch um eine gewisse Bewegung in Umfangsrichtung. Wie nachfolgend erläutert wird, ist aber die Verstellung in radialer Richtung in erster Linie dafür maßgeblich, den Transportstern 10 mittels der Magnethalterungen 24 an einem Zentralelement 34 festzulegen.

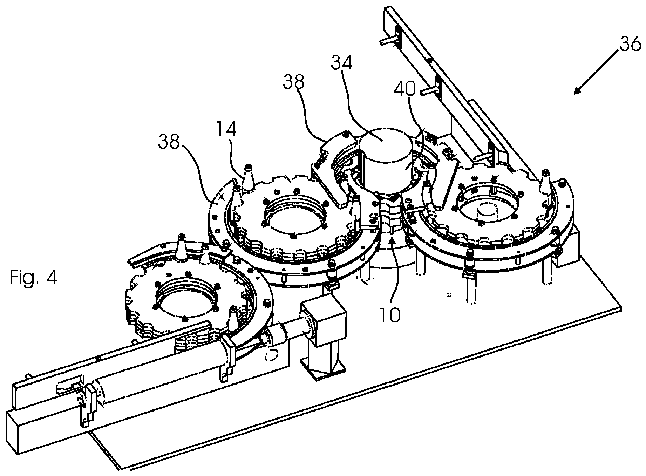

In Fig. 4 - 6 ist eine Behältertransportvorrichtung in Teilen gezeigt. Diese zeigt eine Anzahl von Transportsternen, darunter auch den oben beschriebenen Transportstern 10. Die Transportsterne sind jeweils an Bahnelementen 38 so angeordnet, dass Flaschen 14 in den Aufnahmen 12 bei Drehung der Transportsterne auf einer Kreisbahn bewegt werden.

Die Behältertransportvorrichtung 36 ist Teil einer Behälterbehandlungsanlage (nicht dargestellt), bspw. zur Befüllung, Reinigung, Prüfung der Flaschen 14, etc.

Der vorbeschriebene Transportstern 10 ist dabei festgelegt an einem im Wesentlichen zylinderförmigen, drehbar angetriebenen Zentralelement 34.

Die Stützen 20 dienen zur vertikalen Positionierung des Transportsterns 10 am Zentralelement 34 in der Höhe. Dabei liegen die Stützen 20 auf einem Drehteller (nicht dargestellt) auf.

Der Transportstern 10 ist am Zentralelement 34 festgelegt mittels der Magnethalterungen 24. Der Ring aus den Ringelementen 16a, 16b umgibt das Zentralelement 34. An der in Fig. 1 dargestellten Festlegungsstellung liegen die gekrümmten inneren Magnetflächen der Magnetelemente 30 an der äußeren Zylinderfläche 40 des Zentralelements 34 an. Das Zentralelement 34 ist aus ferromagnetischen Material, bspw. magnetisierbarem Stahl gefertigt, so dass der Transportstern 10 durch die Magnethalterungen 24 daran festgelegt ist.

Bereits durch diese Festlegung kann eine ausreichende Haltekraft erzielt werden, mit der eine Festlegung des Transportsterns 10 sowie auch die Übertragung eines Drehmoments vom Zentralelement 34 auf den Transportstern 10 möglich sind. Zur Unterstützung der lagerichtigen Ausrichtung des Transportsterns 10 gegenüber dem Zentralelement 34 und zur weiter verbesserten Drehmomentübertragung ist zudem am Zentralelement 34 ein axial verlaufender Spalt 42 als Aufnahme gebildet, in dem ein in das Innere der Ringelemente 16a, 16b vorstehendes Eingriffselement 44 passgenau aufgenommen ist.

Durch die Magnethalterungen 24 kann der Transportstern 10 am Zentralelement 34 leicht montiert und demontiert werden, bspw. zum Umrüsten der Behältertransportvorrichtung 36 auf eine andere Behältergröße. Besondere Vorteile bietet dabei die Ausgestaltung des Zentralelements 34 mit glatten äußeren Zylinderflächen, an denen die passend gekrümmten Flächen der Magnetelemente 30 anliegen. Dies ermöglicht eine besonders einfache Reinigung bzw. erschwert die Ablagerung von Verunreinigungen (Hygienic Design).

## Patentansprüche

1. Behältertransportelement mit
- mindestens einem Ringelement (16a, 16b) mit einer am Umfang gebildeten Behältertransportstruktur mit einer Mehrzahl von Behälteraufnahmen (12) **dadurch gekennzeichnet, dass**
- das mindestens eine Ringelement (16a, 16b) mindestens eine Magnethalterung (24) zum Anbringen des Ringelements an einem Zentralelement aufweist mit einem Magnetelement (30),
das verstellbar ist mindestens zwischen einer Festlegungsstellung, wobei die Kopplung des Magnetelements auf dem Zentralelement hergestellt wird, und einer Lösungsstellung, wobei das Magnetelement im Abstand von dem Zentralelement zur Lösung der Kopplung angeordnet wird.

2. Behältertransportelement nach Anspruch 1, bei dem
- das Magnetelement (30) in der Festlegungsstellung radial weiter innen angeordnet ist als in der Lösungsstellung.

3. Behältertransportelement nach einem der vorangehenden Ansprüche, bei dem
- an der Magnethalterung (24) mindestens ein verstellbares Betätigungselement (26) vorgesehen ist, wobei das Magnetelement (30) bei einer Verstellung des Betätigungselements (26) verstellt wird.

4. Behältertransportelement nach Anspruch 3, bei dem
- ein Schwenkhebel (26) als Betätigungselement vorgesehen ist.

5. Behältertransportelement nach einem der vorangehenden Ansprüche, bei dem
- das Magnetelement (30) in einer Führung verschiebbar gelagert ist, um eine Bewegung zwischen der Festlegungsstellung und der Lösungsstellung zu ermöglichen.

6. Behältertransportelement nach einem der vorangehenden Ansprüche, bei dem
- mehrere Magnethalterungen (24) am Ringelement (16a, 16b) angeordnet sind.

7. Behältertransportelement nach einem der vorangehenden Ansprüche, bei dem
- das Ringelement (16a, 16b) mehrteilig ausgebildet ist, wobei zwischen den Teilen des Ringelements Eingrififsstrukturen (22) vorgesehen sind.

8. Behältertransportelement nach Anspruch 6 und 7, bei dem
- an jedem der Teile des Ringelements (16a, 16b) mindestens eine Magnethalterung (24) vorgesehen ist.

9. Behältertransportelement nach einem der vorangehenden Ansprüche, bei dem
- im Inneren des Ringelements (16a, 16b) mindestens ein Eingriffselement (44) vorgesehen ist.

10. Behältertransportelement nach einem der vorangehenden Ansprüche, bei dem
- das Magnetelement (30) eine in der Festlegungsstellung radial nach innen ausgerichtete gekrümmte Fläche aufweist.

11. Behältertransportelement nach einem der vorangehenden Ansprüche, bei dem
- das Ringelement (16a, 16b) mindestens einen ersten und einen axial dazu beabstandeten zweiten Ring (16a, 16b) aufweist,
- wobei das Magnetelement (30) zwischen dem ersten und dem zweiten Ring angeordnet ist.

12. Behältertransportvorrichtung mit
- einem drehbar angeordneten Zentralelement (34),
- und einem Ringelement (10) nach einem der vorangehenden Ansprüche,
- wobei das Ringelement (10) durch die Magnethalterung (24) mit dem Zentralelement (34) gekoppelt ist.

13. Behältertransportvorrichtung nach Anspruch 12, bei der
- am Inneren des Ringelements (16a, 16b) mindestens ein Eingriffselement (44) angeordnet ist,
- und am Zentralelement (34) eine passende Eingriffsstruktur (42) vorgesehen ist,
- und das Eingriffselement (44) in die Eingriffsstruktur (42) eingreift.

14. Behältertransportvorrichtung nach Anspruch 12 oder 13, bei der
- das Zentralelement (34) eine mindestens im Wesentlichen zylinderförmige Außenfläche (46) aufweist.

## Claims

1. Container transport element comprising
at least one ring element (16a, 16b) having a container transport structure with a plurality of container mounts (12), formed at a periphery thereof, **characterised in that** the at least one ring element (16a, 16b) comprises at least one magnet holder (24) with a magnet element (30) for attaching the ring element to a central element, which is adjustable at least between a securing position, wherein the magnet element is coupled on the central element, and a release position, wherein the magnet element is spaced away from the central element for releasing the coupling.

2. Container transport element according to claim 1, in which
- the magnet element (30) in the securing position is arranged radially further inwards than in the release position.

3. Container transport element according to any one of the preceding claims, in which at least one adjustable actuation element (26) is provided at the magnet holder (26), wherein an adjustment movement of the actuation element (26) adjusts the magnet element (30).

4. Container transport element according to claim 3, in which
- the actuation element is provided as a pivot lever (26).

5. Container transport element according to any one of the preceding claims, in which the magnet element (30) is displaceably mounted in a guide, in order to allow a movement between the securing position and the release position.

6. Container transport element according to any one of the preceding claims, in which a plurality of magnet holders (24) are arranged at the ring element (16a, 16b).

7. Container transport element according to any one of the preceding claims, in which the ring element (16a, 16b) is formed in multiple parts, wherein engagement structures (22) are provided between the parts of the ring element.

8. Container transport element according to claims 6 and 7, in which
- each of the parts of the ring element (16a, 16b) is provided with at least one magnet holder (24).

9. Container transport element according to any one of the preceding claims, in which at least one engagement element (44) is provided in the interior of the ring element (16a, 16b).

10. Container transport element according to any one of the preceding claims, in which the magnet element (30) in the secured position exhibits a cambered surface oriented inwards.

11. Container transport element according to any one of the preceding claims, in which the ring element (16a, 16b) comprises at least one first ring, and a second ring (16a, 16b) axially spaced from this first ring, and wherein the magnet element (30) is arranged between the first and the second ring.

12. Container transport device comprising
- a rotatably arranged central element (34),
- and a ring element (10) according to any one of the preceding claims,
- wherein the ring element (10) is coupled by means of the magnet holder (24) to the central element (34).

13. Container transport device according to claim 12, in which
- at least one engagement element (44) is arranged in the interior of the ring element (16a, 16b),
- and a matching engagement structure (42) is provided at the central element (34)
- and the engagement element (44) engages into the engagement structure (42).

14. Container transport device according to claim 12 or 13, in which
- the central element (34) comprises at least an outer surface (46) which is essentially cylindrical in shape.

## Revendications

1. Elément de transport de contenant comprenant
- au moins un élément annulaire (16a, 16b) avec une structure de transport de contenant formée au niveau de la périphérie, pourvue d'une multitude de logements de contenant (12), **caractérisé en ce que**
- l'au moins un élément annulaire (16a, 16b) présente au moins une fixation magnétique (24) servant à installer l'élément annulaire au niveau d'un élément central avec un élément magnétique (30) pouvant être ajusté au moins entre une position de blocage, dans lequel le couplage de l'élément magnétique sur l'élément central est créé, et une position de déblocage, dans lequel l'élément magnétique est disposé à distance de l'élément central afin de débloquer le couplage.

2. Elément de transport de contenant selon la revendication 1, dans le cadre duquel
- l'élément magnétique (30) est disposé dans la position de blocage davantage à l'intérieur radialement que dans la position de déblocage.

3. Elément de transport de contenant selon l'une quelconque des revendications précédentes, dans le cadre duquel
- au moins un élément d'actionnement (26) pouvant être ajusté est prévu au niveau de la fixation magnétique (24), dans lequel l'élément magnétique (30) est ajusté lors d'un ajustement de l'élément d'actionnement (26).

4. Elément de transport de contenant selon la revendication 3, dans le cadre duquel
- un levier de pivotement (26) est prévu en tant qu'élément d'actionnement.

5. Elément de transport de contenant selon l'une quelconque des revendications précédentes, dans le cadre duquel
- l'élément magnétique (30) est monté de manière à pouvoir être coulissé dans un guide afin de permettre un déplacement entre la position de blocage et la position de déblocage.

6. Elément de transport de contenant selon l'une quelconque des revendications précédentes, dans le cadre duquel
- plusieurs fixations magnétiques (24) sont disposées au niveau de l'élément annulaire (16a, 16b).

7. Elément de transport de contenant selon l'une quelconque des revendications précédentes, dans le cadre duquel
- l'élément annulaire (16a, 16b) est réalisé en plusieurs parties, dans lequel des structures de prise (22) sont prévues entre les parties de l'élément annulaire.

8. Elément de transport de contenant selon la revendication 6 et 7, dans le cadre duquel
- au moins une fixation magnétique (24) est prévue au niveau de chacune des parties de l'élément annulaire (16a, 16b).

9. Elément de transport de contenant selon l'une quelconque des revendications précédentes, dans le cadre duquel
- au moins un élément de prise (44) est prévu à l'intérieur de l'élément annulaire (16a, 16b).

10. Elément de transport de contenant selon l'une quelconque des revendications précédentes, dans le cadre duquel
- l'élément magnétique (30) présente une surface incurvée orientée radialement vers l'intérieur dans la position de blocage.

11. Elément de transport de contenant selon l'une quelconque des revendications précédentes, dans le cadre duquel
- l'élément annulaire (16a, 16b) présente au moins un premier et un deuxième anneau (16a, 16b) tenu à distance de manière axiale par rapport à ce dernier,
- dans lequel l'élément magnétique (30) est disposé entre le premier et le deuxième anneau.

12. Dispositif de transport de contenant comprenant
- un élément central (34) disposé de manière à pouvoir tourner,
- et un élément annulaire (10) selon l'une quelconque des revendications précédentes,
- dans lequel l'élément annulaire (10) est couplé à l'élément central (34) par la fixation magnétique (24).

13. Dispositif de transport de contenant selon la revendication 12, dans le cadre duquel
- au moins un élément de prise (44) est disposé à l'intérieur de l'élément annulaire (16a, 16b),
- une structure de prise (42) d'adaptation est prévue au niveau de l'élément central (34),
- et l'élément de prise (44) vient en prise avec la structure de prise (42).

14. Dispositif de transport de contenant selon la revendication 12 ou 13, dans le cadre duquel
- l'élément central (34) présente une surface extérieure (46) présentant au moins sensiblement une forme cylindrique.
